# EUROPEAN PATENT SPECIFICATION

(11) **EP 3 270 649 B1**
(45) Date of publication and mention of the grant of the patent: **01.01.2020**
(21) Application number: 15891476.2
(22) Date of filing: 11.05.2015
(51) Int. Cl.: H04W 72/04

(54) **SIGNAL TRANSMISSION METHODS, BASE STATION AND USER EQUIPMENT**
SIGNALÜBERTRAGUNGSVERFAHREN, BASISSTATION UND BENUTZERGERÄT
PROCÉDÉS DE TRANSMISSION DE SIGNAL, STATION DE BASE ET ÉQUIPEMENT UTILISATEUR

(43) Date of publication of application: 17.01.2018
(73) Proprietor: Huawei Technologies Co., Ltd., Longgang District Shenzhen, Guangdong 518129 (CN)
(72) Inventor: WANG, Jian, Shenzhen Guangdong 518129 (CN)
(74) Representative: Pfenning, Meinig & Partner mbB
(86) International application number: PCT/CN2015/078647
(87) International publication number: WO 2016/179773

(56) References cited:
- WO-A1-2013/117128
- WO-A1-2014/169438
- CN-A- 103 379 651
- CN-A- 104 113 832
- CN-A- 104 284 445
- CN-A- 104 541 563
- US-A1- 2015 004 901
- US-A1- 2015 009 910

## Description

### TECHNICAL FIELD

Embodiments of the present invention relate to the communications field, and in particular, to signal transmission methods, a base station, and user equipment.

### BACKGROUND

User equipment (UE, User Equipment) in a network can directly communicate with each other by using a device-to-device proximity service (D2D ProSe, Device-to-DeviceProximity Service), and communication data does not need to be relayed by a base station. A function of direct communication of UE has been applied to some currently used cluster systems and some portable wireless communications devices. Because of commercial success of a Long Term Evolution (LTE, Long Term Evolution) system, the D2D ProSe is provided by a physical layer of the LTE system, so that a service scope of the LTE system is enriched, and an application with the D2D ProSe can be used by more users.

In a ProSe service of an LTE network, to implement farthest-distance device-to-device D2D (Device-to-Device) communication, the UE is generally required to use maximum transmit power. However, when the UE uses the maximum transmit power to send a signal, because of in-band interference of the UE, when the signal sent by the UE arrives at a base station receiver, strong interference to an uplink signal of a base station is caused, and even the uplink signal received by the base station is submerged in the in-band interference of the UE.

In the prior art, a power control method is used for the UE, and transmit power of the UE is affected by open loop power. When the UE is relatively close to the base station, the UE cannot use the maximum transmit power. When the transmit power of the UE is reduced, the in-band interference of the UE is reduced, and interference from the signal sent by the UE to the uplink signal of the base station is reduced accordingly. However, a signal coverage area is reduced when transmit power is reduced. Therefore, in the prior art, the power control method is used for the UE, and consequently, when the transmit power of the UE is reduced, a coverage area of the signal sent by the UE is reduced, and a D2D signal receiving area is reduced.

WO2014169438A1 provides a communications mode switching method, apparatus and system. The method comprises: an eNB determines a mode switching manner according to a preset policy; if the mode switching manner is a non-PDCP parameter interaction, the eNB sends a first mode switching command to a UE on a D2D link, and resets all PDCP transmitting parameters and PDCP reception parameters to 0; and if the mode switching manner is a full-PDCP parameter interaction or a partial-PDCP parameter interaction, the eNB sends a mode switching preparation command to the UE on the D2D link, so that the UE reports the PDCP transmitting parameters and the PDCP reception parameters and a PDCP state report or reports the reception SN of the first discarded PDCP and the corresponding HFN to complete the PDCP parameter setting and the mode switching. By means of the method, apparatus and system of the embodiments of the present invention, different solutions are provided for different communications mode switching scenarios, and accordingly, thereby completely solving the service continuity problem during mode switching.

### SUMMARY

Embodiments of the present invention provide signal transmission methods, a base station, and user equipment according to the independent claims, so that transmit power of UE can be controlled, interference is reduced, and a D2D signal receiving area is expanded.

In view of the above, a first aspect of the present invention provides a signal transmission method, including:
configuring, by a base station, a first resource pool in an uplink frequency;
configuring, by the base station, a second resource pool in a downlink frequency;
receiving, by the base station in the first resource pool, a device-to-device D2D signal sent by first user equipment UE, where the D2D signal includes one or any combination of a scheduling assignment SA signal, a D2D data signal, or a D2D discovery signal; and
sending, by the base station, the D2D signal to second user equipment UE in the second resource pool.

With reference to the first aspect of the present invention, in a first implementation of the first aspect of the present invention, the first resource pool includes a first target resource pool, the second resource pool includes a second target resource pool, and the receiving, by the base station in the first resource pool, a D2D signal sent by first user equipment UE includes:
receiving, by the base station in the first target resource pool of the first resource pool, the D2D signal sent by the first user equipment UE; and
the sending, by the base station, the D2D signal to second user equipment UE in the second resource pool includes:
   sending, by the base station, the D2D signal to the second user equipment UE in the second target resource pool of the second resource pool.

With reference to the first implementation of the first aspect of the present invention, in a second implementation of the first aspect of the present invention, the first target resource pool is a first scheduling assignment SA resource pool, a first D2D data signal resource pool, or a first D2D discovery signal resource pool; and
the second target resource pool is a second scheduling assignment SA resource pool, a second D2D data signal resource pool, or a second D2D discovery signal resource pool.

A second aspect of the present invention provides a signal transmission method, including:
receiving, by second user equipment UE in a second resource pool, a D2D signal sent by first user equipment UE in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency.

With reference to the second aspect of the present invention, in a first implementation of the second aspect of the present invention, the method further includes:
receiving, by the second user equipment UE in the first resource pool, the D2D signal sent by the first user equipment UE.

With reference to the second aspect of the present invention or the first implementation of the second aspect of the present invention, in a second implementation of the second aspect of the present invention, the first resource pool includes a first target resource pool, the second resource pool includes a second target resource pool, and the receiving, by second user equipment UE in a second resource pool, a D2D signal sent by first user equipment UE in a first resource pool and forwarded by a base station includes:
receiving, by the second user equipment UE in the second target resource pool of the second resource pool, the D2D signal sent by the first user equipment UE in the first target resource pool of the first resource pool and forwarded by the base station.

With reference to the second implementation of the second aspect of the present invention, in a third implementation of the second aspect of the present invention, the first target resource pool is a first scheduling assignment SA resource pool, a first D2D data signal resource pool, or a first D2D discovery signal resource pool, and the second target resource pool is a second scheduling assignment SA resource pool, a second D2D data signal resource pool, or a second D2D discovery signal resource pool.

A third aspect of the present invention provides a signal transmission method, including:
receiving, by second user equipment UE in a first resource pool, a D2D signal sent by first user equipment UE, where the D2D signal includes one or any combination of a scheduling assignment SA signal, a D2D data signal, or a D2D discovery signal, and the first resource pool is a resource pool configured by a base station in an uplink frequency; and
when the second user equipment UE fails to receive, in the first resource pool, the D2D signal sent by the first user equipment UE, receiving, by the second user equipment UE in a second resource pool, the D2D signal sent by the first user equipment UE in the first resource pool and forwarded by the base station, where the second resource pool is a resource pool configured by the base station in a downlink frequency.

With reference to the third aspect of the present invention, in a first implementation of the third aspect of the present invention, the first resource pool includes a first target resource pool, and the second resource pool includes a second target resource pool;
the receiving, by second user equipment UE in a first resource pool, a D2D signal sent by first user equipment UE includes:
receiving, by the second user equipment UE in the first target resource pool of the first resource pool, the D2D signal sent by the first user equipment UE; and
the receiving, by the second user equipment UE in a second resource pool, the D2D signal sent by the first user equipment UE in the first resource pool and forwarded by the base station includes:
   receiving, by the second user equipment UE in the second target resource pool of the second resource pool, the D2D signal sent by the first user equipment UE in the first target resource pool of the first resource pool and forwarded by the base station.

With reference to the first implementation of the third aspect of the present invention, in a second implementation of the third aspect of the present invention, the first target resource pool is a first scheduling assignment SA resource pool, a first D2D data signal resource pool, or a first D2D discovery signal resource pool, and the second target resource pool is a second scheduling assignment SA resource pool, a second D2D data signal resource pool, or a second D2D discovery signal resource pool.

A fourth aspect of the present invention provides a base station, including:
a first configuration module, configured to configure a first resource pool in an uplink frequency;
a second configuration module, configured to configure a second resource pool in a downlink frequency;
a receiving module, configured to receive, in the first resource pool configured by the first configuration module, a device-to-device D2D signal sent by first user equipment UE, where the D2D signal includes one or any combination of a scheduling assignment SA signal, a D2D data signal, or a D2D discovery signal; and
a sending module, configured to send, in the second resource pool configured by the second configuration module, the D2D signal received by the receiving module to second user equipment UE.

With reference to the fourth aspect of the present invention, in a first implementation of the fourth aspect of the present invention, the first resource pool includes a first target resource pool, and the second resource pool includes a second target resource pool;
the receiving module includes:
a receiving unit, configured to receive, in the first target resource pool of the first resource pool, the D2D signal sent by the first user equipment UE; and
the sending module includes:
   a sending unit, configured to send the D2D signal to the second user equipment UE in the second target resource pool of the second resource pool.

A fifth aspect of the present invention provides a base station, including: a base transceiver station BTS and a base station controller BSC, where
the base station controller BSC performs the following procedures:
configuring a first resource pool in an uplink frequency; and
configuring a second resource pool in a downlink frequency; and
the base transceiver station BTS performs the following procedures:
   receiving, in the first resource pool, a device-to-device D2D signal sent by first user equipment UE, where the D2D signal includes one or any combination of a scheduling assignment SA signal, a D2D data signal, or a D2D discovery signal; and
   sending the D2D signal to second user equipment UE in the second resource pool.

With reference to the fifth aspect of the present invention, in a first implementation of the fifth aspect of the present invention, the first resource pool includes a first target resource pool, and the second resource pool includes a second target resource pool; and
the base transceiver station BTS specifically performs the following procedures:
receiving, in the first target resource pool of the first resource pool, the D2D signal sent by the first user equipment UE; and
sending the D2D signal to the second user equipment UE in the second target resource pool of the second resource pool.

A sixth aspect of the present invention provides user equipment UE, including:
a first receiving module, configured to receive, in a second resource pool, a D2D signal sent by first user equipment UE in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency.

With reference to the sixth aspect of the present invention, in a first implementation of the sixth aspect of the present invention, the user equipment UE further includes:
a second receiving module, configured to receive, in the first resource pool, the D2D signal sent by the first user equipment UE.

With reference to the sixth aspect of the present invention or the first implementation of the sixth aspect, in a second implementation of the sixth aspect of the present invention, the first resource pool includes a first target resource pool, and the second resource pool includes a second target resource pool; and
the first receiving module includes:
a receiving unit, configured to receive, in the second target resource pool of the second resource pool, the D2D signal sent by the first user equipment UE in the first target resource pool of the first resource pool and forwarded by the base station.

A seventh aspect of the present invention provides user equipment UE, including: a radio frequency circuit, a memory, and a processor, where the radio frequency circuit performs the following procedure:
receiving, in a second resource pool, a D2D signal sent by first user equipment UE in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency.

With reference to the seventh aspect of the present invention, in a first implementation of the seventh aspect of the present invention, the radio frequency circuit further performs the following procedure:
receiving, in the first resource pool, the D2D signal sent by the first user equipment UE.

With reference to the seventh aspect of the present invention or the first implementation of the seventh aspect of the present invention, in a second implementation of the seventh aspect of the present invention, the first resource pool includes a first target resource pool, and the second resource pool includes a second target resource pool; and
the radio frequency circuit specifically performs the following procedure:
receiving, in the second target resource pool of the second resource pool, the D2D signal sent by the first user equipment UE in the first target resource pool of the first resource pool and forwarded by the base station.

An eighth aspect of the present invention provides user equipment UE, including:
a first receiving module, configured to receive, in a first resource pool, a D2D signal sent by first user equipment UE, where the D2D signal includes one or any combination of a scheduling assignment SA signal, a D2D data signal, or a D2D discovery signal, and the first resource pool is a resource pool configured by a base station in an uplink frequency; and
a second receiving module, configured to: when the first receiving module fails to receive, in the first resource pool, the D2D signal sent by the first user equipment UE, receive, in a second resource pool, the D2D signal sent by the first user equipment UE in the first resource pool and forwarded by the base station, where the second resource pool is a resource pool configured by the base station in a downlink frequency.

With reference to the eighth aspect of the present invention, in a first implementation of the eighth aspect of the present invention, the first resource pool includes a first target resource pool, and the second resource pool includes a second target resource pool;
the first receiving module includes:
a first receiving unit, configured to receive, in the first target resource pool of the first resource pool, the D2D signal sent by the first user equipment UE; and
the second receiving module includes:
   a second receiving unit, configured to: when the first receiving unit fails to receive, in the first target resource pool, the D2D signal sent by the first user equipment UE, receive, in the second target resource pool of the second resource pool, the D2D signal sent by the first user equipment UE in the first target resource pool of the first resource pool and forwarded by the base station.

A ninth aspect of the present invention provides user equipment UE, including: a radio frequency circuit, a memory, and a processor, where
the radio frequency circuit performs the following procedures:
receiving, in a first resource pool, a D2D signal sent by first user equipment UE, where the D2D signal includes one or any combination of a scheduling assignment SA signal, a D2D data signal, or a D2D discovery signal, and the first resource pool is a resource pool configured by a base station in an uplink frequency; and
when the radio frequency circuit fails to receive, in the first resource pool, the D2D signal sent by the first user equipment UE, receiving, in a second resource pool, the D2D signal sent by the first user equipment UE in the first resource pool and forwarded by the base station, where the second resource pool is a resource pool configured by the base station in a downlink frequency.

With reference to the ninth aspect of the present invention, in a first implementation of the ninth aspect of the present invention, the first resource pool includes a first target resource pool, and the second resource pool includes a second target resource pool; and
the radio frequency circuit specifically performs the following procedures:
receiving, in the first target resource pool of the first resource pool, the D2D signal sent by the first user equipment UE; and when the radio frequency circuit fails to receive the D2D signal in the first target resource pool, receiving, in the second target resource pool of the second resource pool, the D2D signal sent by the first user equipment UE in the first target resource pool of the first resource pool and forwarded by the base station.

It can be learned from the foregoing technical solutions that the embodiments of the present invention have the following advantages:
In the embodiments of the present invention, the base station configures the first resource pool in the uplink frequency, configures the second resource pool in the downlink frequency, receives, in the first resource pool, the D2D signal sent by the first user equipment, and sends the D2D signal to the second user equipment in the second resource pool. The D2D signal is relayed and forwarded by the base station, so that UE in a signal coverage area of the base station can receive the D2D signal in the second resource pool. Because transmit power of the base station is greater than transmit power of the UE, UE in a larger area can receive the D2D signal by using the base station, that is, even if the UE does not use maximum transmit power, another UE can receive the D2D signal by using the base station. In the method, transmit power of UE can be controlled, interference is reduced, and a D2D signal receiving area is expanded.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an embodiment of a signal transmission method according to an embodiment of the present invention;
FIG. 2 is a schematic diagram of another embodiment of a signal transmission method according to an embodiment of the present invention;
FIG. 3 is a schematic diagram of another embodiment of a signal transmission method according to an embodiment of the present invention;
FIG. 4 is a schematic diagram of another embodiment of a signal transmission method according to an embodiment of the present invention;
FIG. 5 is a schematic diagram of another embodiment of a signal transmission method according to an embodiment of the present invention;
FIG. 6 is a schematic diagram of another embodiment of a signal transmission method according to an embodiment of the present invention;
FIG. 7 is a schematic diagram of an embodiment of a base station according to an embodiment of the present invention;
FIG. 8 is a schematic diagram of another embodiment of a base station according to an embodiment of the present invention;
FIG. 9 is a schematic diagram of another embodiment of a base station according to an embodiment of the present invention;
FIG. 10 is a schematic diagram of an embodiment of user equipment according to an embodiment of the present invention;
FIG. 11 is a schematic diagram of another embodiment of user equipment according to an embodiment of the present invention;
FIG. 12 is a schematic diagram of another embodiment of user equipment according to an embodiment of the present invention;
FIG. 13 is a schematic diagram of another embodiment of user equipment according to an embodiment of the present invention; and
FIG. 14 is a schematic diagram of another embodiment of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

It should be understood that, the technical solutions in the embodiments of the present invention may be applied to various communications systems, such as: a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), a Universal Mobile Telecommunications System (Universal Mobile Telecommunications System, UMTS), and a Worldwide Interoperability for Microwave Access (Worldwide Interoperability for Microwave Access, WiMAX) communications system.

It should be understood that in the embodiments of the present invention, first user equipment or second user equipment includes but is not limited to user equipment (English full name: User Equipment, UE for short), a mobile station (English full name: Mobile Station, MS for short), a mobile terminal (Mobile Terminal), a mobile telephone (Mobile Telephone), a handset (handset), portable equipment (portable equipment), and the like. The user equipment may communicate with one or more core networks by using a radio access network (English full name: Radio Access Network, RAN for short). For example, the user equipment may be a mobile telephone (or referred to as a "cellular" phone), or a computer having a wireless communication function; or the user equipment may be a portable, pocket-sized, handheld, computer built-in, or in-vehicle mobile apparatus.

In the embodiments of the present invention, the base station may be a base transceiver station (English full name: Base Transceiver Station, BTS for short) in GSM or CDMA, or may be a NodeB (NodeB) in WCDMA, or may be an evolved NodeB (English full name: evolved NodeB, eNB or e-NodeB for short) in LTE. This is not limited in the embodiments of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

Embodiments of the present invention provide a signal transmission method, a base station, and user equipment, so that transmit power of UE can be controlled, interference is reduced, and a D2D signal receiving area is expanded.

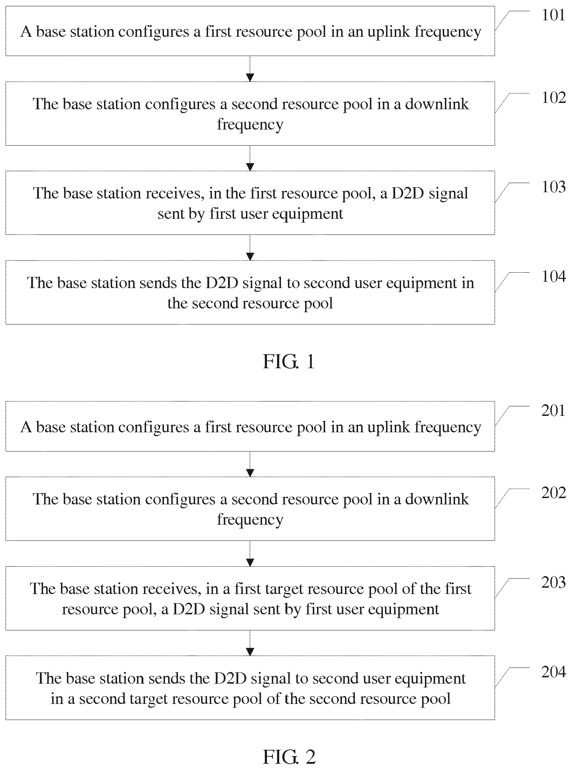

The following first describes a signal transmission method in an embodiment of the present invention from a perspective of a base station. Referring to FIG. 1, an embodiment of the signal transmission method in this embodiment of the present invention includes the following steps.

101. Abase station configures a first resource pool in an uplink frequency.

The base station configures the first resource pool in the uplink frequency. It should be noted that the uplink frequency is a frequency used by user equipment to send a signal to the base station. A resource pool is an access point provided for a user during communication by using an air interface channel.

102. The base station configures a second resource pool in a downlink frequency. The base station configures the second resource pool in the downlink frequency. It should be noted that the downlink frequency is a frequency used by the base station to send a signal to the user equipment.

103. The base station receives, in the first resource pool, a D2D signal sent by first user equipment.

After the base station configures the first resource pool, the first user equipment sends the D2D signal in the first resource pool, and the base station receives, in the first resource pool, the D2D signal sent by the first user equipment. It should be noted that the D2D signal is a communication signal from user equipment to user equipment, and is used for direct communication between user equipments. The D2D signal includes one or any combination of a scheduling assignment (SA, Scheduling Assignment) signal, a D2D data signal, or a D2D discovery signal.

104. The base station sends the D2D signal to second user equipment in the second resource pool.

After receiving the D2D signal in the first resource pool, the base station sends the D2D signal to the second user equipment in the second resource pool, so that the second user equipment can receive the D2D signal in the second resource pool.

In this embodiment of the present invention, the base station configures the first resource pool in the uplink frequency, configures the second resource pool in the downlink frequency, receives, in the first resource pool, the D2D signal sent by the first user equipment, and sends the D2D signal to the second user equipment in the second resource pool. The D2D signal is relayed and forwarded by the base station, so that UE in a signal coverage area of the base station can receive the D2D signal in the second resource pool. Because transmit power of the base station is greater than transmit power of the UE, UE in a larger area can receive the D2D signal by using the base station, that is, even if the UE does not use maximum transmit power, another UE can receive the D2D signal by using the base station. In the method, transmit power of UE can be controlled, interference is reduced, and a D2D signal receiving area is expanded.

To facilitate understanding, the following describes a signal transmission method in detail in an embodiment of the present invention. Referring to FIG. 2, another embodiment of the signal transmission method in this embodiment of the present invention includes the following steps.

201. Abase station configures a first resource pool in an uplink frequency.

The base station configures the first resource pool in the uplink frequency. It should be noted that the uplink frequency is a frequency used by user equipment to send a signal to the base station. A resource pool is an access point provided for a user during communication by using an air interface channel. The first resource pool includes a first target resource pool, and may further include another resource pool. This is not specifically limited herein.

202. The base station configures a second resource pool in a downlink frequency.

The base station configures the second resource pool in the downlink frequency. It should be noted that the downlink frequency is a frequency used by the base station to send a signal to the user equipment. It should be further noted that the second resource pool includes a second target resource pool, and may further include another resource pool. This is not specifically limited herein.

203. The base station receives, in a first target resource pool of the first resource pool, a D2D signal sent by first user equipment.

After the base station configures the first resource pool, the first user equipment sends the D2D signal in the first target resource pool of the first resource pool, and the base station receives, in the first target resource pool of the first resource pool, the D2D signal sent by the first user equipment.

It should be noted that the D2D signal is a communication signal from user equipment to user equipment, and is used for direct communication between user equipments. The D2D signal includes one or any combination of a scheduling assignment SA signal, a D2D data signal, or a D2D discovery signal. The first target resource pool is a first SA resource pool, a first D2D data signal resource pool, or a first D2D discovery signal resource pool. Specifically, the base station receives the SA signal in the first SA resource pool of the first resource pool, or receives the D2D data signal in the first D2D data signal resource pool of the first resource pool, or receives the D2D discovery signal in the first D2D discovery signal resource pool of the first resource pool.

204. The base station sends the D2D signal to second user equipment in a second target resource pool of the second resource pool.

After receiving the D2D signal in the first target resource pool, the base station sends the D2D signal to the second user equipment in the second target resource pool of the second resource pool, so that the second user equipment can receive the D2D signal in the second target resource pool of the second resource pool.

It should be noted that the second target resource pool is a second SA resource pool, a second D2D data signal resource pool, or a second D2D discovery signal resource pool. Specifically, the base station sends the SA signal to the second user equipment in the second SA resource pool of the second resource pool, or sends the D2D data signal to the second user equipment in the second D2D data signal resource pool of the second resource pool, or sends the D2D discovery signal to the second user equipment in the second D2D discovery signal resource pool of the second resource pool.

It should be further noted that there may be a correspondence between a resource pool of the first resource pool and a resource pool of the second resource pool. The correspondence may be a one-to-one mapping relationship, or may be a one-to-many mapping relationship. This is not specifically limited herein. For example, the first target resource pool is corresponding to the second target resource pool. In this case, the D2D signal received by the base station in the first target resource pool is sent in the second target resource pool.

In this embodiment of the present invention, the base station configures the first resource pool in the uplink frequency, configures the second resource pool in the downlink frequency, receives, in the first target resource pool of the first resource pool, the D2D signal sent by the first user equipment, and sends the D2D signal to the second user equipment in the second target resource pool of the second resource pool. The first target resource pool is corresponding to the second target resource pool, and the D2D signal received by the base station in the first target resource pool is sent to the second user equipment in the second target resource pool, so that the second user equipment can purposefully receive the D2D signal in the first resource pool or the second resource pool according to a correspondence between the first target resource pool and the second target resource pool. In this way, receive power of the second user equipment can be reduced.

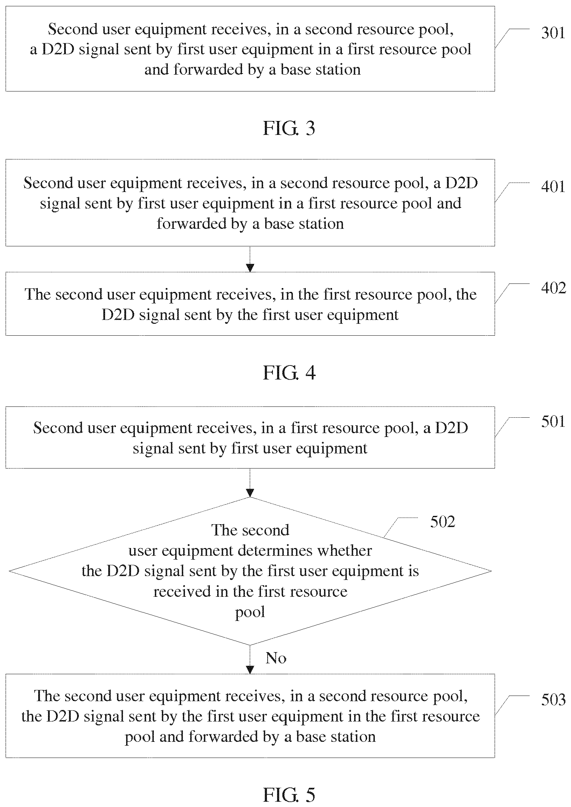

The foregoing describes a signal transmission method in an embodiment of the present invention from a perspective of a base station, and the following provides description from a perspective of second user equipment. Referring to FIG. 3, another embodiment of the signal transmission method in this embodiment of the present invention includes the following steps.

301. Second user equipment receives, in a second resource pool, a D2D signal sent by first user equipment in a first resource pool and forwarded by a base station.

The base station configures the first resource pool in an uplink frequency, and configures the second resource pool in a downlink frequency. The first user equipment sends the D2D signal in the first resource pool. The base station receives, in the first resource pool, the D2D signal sent by the first user equipment, and sends the D2D signal to the second user equipment in the second resource pool. The second user equipment receives, in the second resource pool, the D2D signal sent by the first user equipment in the first resource pool and forwarded by the base station.

It should be noted that the uplink frequency is a frequency used by user equipment to send a signal to the base station, and the downlink frequency is a frequency used by the base station to send a signal to the user equipment. A resource pool is an access point provided for a user during communication by using an air interface channel. The D2D signal is a communication signal from user equipment to user equipment, and is used for direct communication between user equipments. The D2D signal includes one or any combination of a scheduling assignment SA signal, a D2D data signal, or a D2D discovery signal.

In this embodiment of the present invention, the second user equipment may receive, in the second resource pool, the D2D signal sent by the first user equipment in the first resource pool and forwarded by the base station. Because transmit power of the base station is greater than transmit power of the first user equipment, even if the transmit power of the first user equipment is relatively low, and the D2D signal sent in the first resource pool cannot arrive at the second user equipment, the second user equipment can receive, in the second resource pool, the D2D signal forwarded by the base station. In this solution, the transmit power of the first user equipment can be controlled, interference from the first user equipment to the base station is reduced, and a D2D signal receiving area of the second user equipment can be expanded.

To facilitate understanding, the following describes a signal transmission method in detail in an embodiment of the present invention. Referring to FIG. 4, another embodiment of the signal transmission method in this embodiment of the present invention includes the following steps.

401. Second user equipment receives, in a second resource pool, a D2D signal sent by first user equipment in a first resource pool and forwarded by a base station.

The base station configures the first resource pool in an uplink frequency, and configures the second resource pool in a downlink frequency. The first user equipment sends the D2D signal in the first resource pool. The base station receives, in the first resource pool, the D2D signal sent by the first user equipment, and sends the D2D signal to the second user equipment in the second resource pool. The second user equipment may receive, in the second resource pool, the D2D signal sent by the first user equipment in the first resource pool and forwarded by the base station.

It should be noted that the uplink frequency is a frequency used by user equipment to send a signal to the base station, and the downlink frequency is a frequency used by the base station to send a signal to the user equipment. A resource pool is an access point provided for a user during communication by using an air interface channel. The D2D signal is a communication signal from user equipment to user equipment, and is used for direct communication between user equipments. The D2D signal includes one or any combination of an SA signal, a D2D data signal, or a D2D discovery signal. The second resource pool may include a second target resource pool, the first resource pool may include a first target resource pool, and the first target resource pool is corresponding to the second target resource pool. The first target resource pool is a first SA resource pool, a first D2D data signal resource pool, or a first D2D discovery signal resource pool. The second target resource pool may be a second SA resource pool, a second D2D data signal resource pool, or a second D2D discovery signal resource pool.

Specifically, the base station receives, in the first SA resource pool of the first resource pool, an SA signal sent by the first user equipment, and sends the SA signal in the second SA resource pool of the second resource pool, and the second user equipment receives the SA signal in the second SA resource pool.

The base station receives, in the first D2D data signal resource pool of the first resource pool, a D2D data signal sent by the first user equipment, and sends the D2D data signal in the second D2D data signal resource pool of the second resource pool, and the second user equipment receives the D2D data signal in the second D2D data signal resource pool.

The base station receives, in the first D2D discovery signal resource pool of the first resource pool, a D2D discovery signal sent by the first user equipment, and sends the D2D discovery signal in the second D2D discovery signal resource pool of the second resource pool, and the second user equipment receives the D2D discovery signal in the second D2D discovery signal resource pool.

It may be understood that the first resource pool and the second resource pool may further include another resource pool. There may be a correspondence between a resource pool of the first resource pool and a resource pool of the second resource pool. The correspondence may be a one-to-one mapping relationship, or may be a one-to-many mapping relationship. This is not specifically limited herein. The second user equipment may receive, in the second resource pool in another manner, the D2D signal sent by the first user equipment in the first resource pool and forwarded by the base station. This is not specifically limited herein.

402. The second user equipment receives, in the first resource pool, the D2D signal sent by the first user equipment.

After receiving, in the second resource pool, the D2D signal sent by the first user equipment in the first target resource pool and forwarded by the base station, the second user equipment receives, in the first resource pool, the D2D signal sent by the first user equipment. Specifically, when the first user equipment sends the D2D signal in the first target resource pool of the first resource pool, the second user equipment receives, in the first target resource pool of the first resource pool, the D2D signal sent by the first user equipment.

It should be noted that the second user equipment may receive, in the first resource pool in another manner, the D2D signal sent by the first user equipment. This is not specifically limited herein.

In this embodiment of the present invention, in addition to receiving, in the second resource pool, the D2D signal sent by the first user equipment in the first resource pool and forwarded by the base station, the second user equipment receives, in the first resource pool, the D2D signal sent by the first user equipment. In this way, a case in which the second user equipment cannot receive the D2D signal because of failing forwarding of the base station can be avoided, so that the second user equipment can receive the D2D signal.

The foregoing describes a signal transmission method in an embodiment of the present invention from a perspective of user equipment, and the following provides description from another perspective of user equipment. Referring to FIG. 5, another embodiment of the signal transmission method in this embodiment of the present invention includes the following steps.

501. Second user equipment receives, in a first resource pool, a D2D signal sent by first user equipment.

A base station configures the first resource pool in an uplink frequency, and configures a second resource pool in a downlink frequency. The first user equipment sends the D2D signal in the first resource pool. The base station receives, in the first resource pool, the D2D signal sent by the first user equipment, and sends the D2D signal to the second user equipment in the second resource pool. The second user equipment receives, in the first resource pool, the D2D signal sent by the first user equipment.

It should be noted that the D2D signal is a communication signal from user equipment to user equipment, and is used for direct communication between user equipments. The D2D signal includes one or any combination of a scheduling assignment SA signal, a D2D data signal, or a D2D discovery signal.

502. The second user equipment determines whether the D2D signal sent by the first user equipment is received in the first resource pool, and if no, performs step 503. The second user equipment determines whether the D2D signal sent by the first user equipment is received in the first resource pool, and if no, performs step 503.

503. The second user equipment receives, in a second resource pool, the D2D signal sent by the first user equipment in the first resource pool and forwarded by a base station.

When the second user equipment fails to receive, in the first resource pool, the D2D signal sent by the first user equipment, the second user equipment receives, in the second resource pool, the D2D signal sent by the first user equipment in the first resource pool and forwarded by the base station. It should be noted that a reason why the second user equipment fails to receive, in the first resource pool, the D2D signal sent by the first user equipment may be that the second user equipment is far away from the first user equipment, and therefore, a signal sent by the first user equipment does not cover the second user equipment, or there may be another reason. This is not specifically limited herein.

In this embodiment of the present invention, the second user equipment first receives, in the first resource pool, the D2D signal sent by the first user equipment. When the D2D signal sent by the first user equipment is not received in the first resource pool, the second user equipment then receives, in the second resource pool, the D2D signal sent by the first user equipment in the first resource pool and forwarded by the base station. That is, even if transmit power of the first user equipment is relatively low, and the D2D signal sent in the first resource pool cannot arrive at the second user equipment, the second user equipment can receive, in the second resource pool, the D2D signal forwarded by the base station. In this solution, the transmit power of the first user equipment can be controlled, interference from the first user equipment to the base station is reduced, and a D2D signal receiving area of the second user equipment can be expanded.

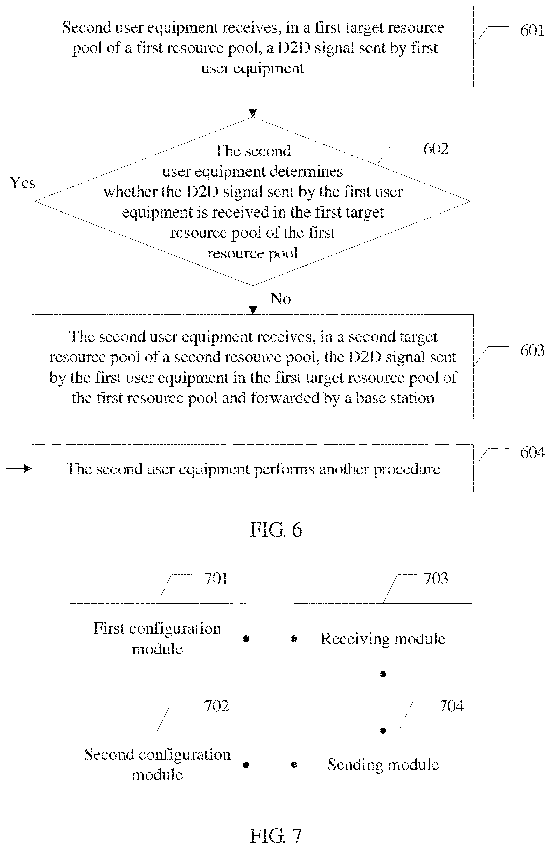

To facilitate understanding, the following describes a signal transmission method in detail in an embodiment of the present invention. Referring to FIG. 6, another embodiment of the signal transmission method in this embodiment of the present invention includes the following steps.

601. Second user equipment receives, in a first target resource pool of a first resource pool, a D2D signal sent by first user equipment.

A base station configures the first resource pool in an uplink frequency, and configures a second resource pool in a downlink frequency. The first user equipment sends the D2D signal in the first target resource pool of the first resource pool. The base station receives, in the first target resource pool of the first resource pool, the D2D signal sent by the first user equipment, and sends the D2D signal to the second user equipment in a second target resource pool of the second resource pool. The second user equipment receives, in the first target resource pool of the first resource pool, the D2D signal sent by the first user equipment.

It should be noted that the D2D signal is a communication signal from user equipment to user equipment, and is used for direct communication between user equipments.

The D2D signal includes one or any combination of a scheduling assignment SA signal, a D2D data signal, or a D2D discovery signal. In addition to the first target resource pool, the first resource pool may include another resource pool. This is not specifically limited herein. The first target resource pool is a first SA resource pool, a first D2D data signal resource pool, or a first D2D discovery signal resource pool.

Specifically, the second user equipment receives, in the first SA resource pool of the first resource pool, an SA signal sent by the first user equipment, or receives, in the first D2D data signal resource pool of the first resource pool, a D2D data signal sent by the first user equipment, or receives, in the first D2D discovery signal resource pool of the first resource pool, a D2D discovery signal sent by the first user equipment.

602. The second user equipment determines whether the D2D signal sent by the first user equipment is received in the first target resource pool of the first resource pool, and if no, performs step 603; or if yes, performs step 604.

The second user equipment determines whether the D2D signal sent by the first user equipment is received in the first target resource pool of the first resource pool, and if no, performs step 603; or if yes, performs step 604.

603. The second user equipment receives, in a second target resource pool of a second resource pool, the D2D signal sent by the first user equipment in the first target resource pool of the first resource pool and forwarded by a base station.

When the second user equipment fails to receive, in the first target resource pool, the D2D signal sent by the first user equipment, the second user equipment receives, in the second target resource pool of the second resource pool, the D2D signal sent by the first user equipment in the first target resource pool and forwarded by the base station. It should be noted that in addition to the second target resource pool, the second resource pool may include another resource pool. This is not specifically limited herein. The second target resource pool is a second SA resource pool, a second D2D data signal resource pool, or a second D2D discovery signal resource pool.

It should be further noted that there may be a correspondence between a resource pool of the first resource pool and a resource pool of the second resource pool. The correspondence may be a one-to-one mapping relationship, or may be a one-to-many mapping relationship. This is not specifically limited herein. For example, the first target resource pool is corresponding to the second target resource pool, and in this case, the D2D signal received by the base station in the first target resource pool is sent in the second target resource pool. When the second user equipment fails to receive the D2D signal in the first target resource pool, the second user equipment may directly receive the D2D signal in the second target resource pool.

Specifically, when the second user equipment fails to receive, in the first SA resource pool of the first resource pool, the SA signal sent by the first user equipment, the second user equipment receives, in the second SA resource pool of the second resource pool, the SA signal sent by the first user equipment in the first SA resource pool of the first resource pool and forwarded by the base station.

When the second user equipment fails to receive, in the first D2D data signal resource pool of the first resource pool, the D2D data signal sent by the first user equipment, the second user equipment receives, in the second D2D data signal resource pool of the second resource pool, the D2D data signal sent by the first user equipment in the first D2D data signal resource pool of the first resource pool and forwarded by the base station.

When the second user equipment fails to receive, in the first D2D discovery signal resource pool of the first resource pool, the D2D discovery signal sent by the first user equipment, the second user equipment receives, in the second D2D discovery signal resource pool of the second resource pool, the D2D discovery signal sent by the first user equipment in the first D2D discovery signal resource pool of the first resource pool and forwarded by the base station.

604. The second user equipment performs another procedure.

When the second user equipment receives, in the first target resource pool, the D2D signal sent by the first user equipment, the second user equipment performs the another procedure.

In this embodiment of the present invention, the second user equipment receives, in the first target resource pool of the first resource pool, the D2D signal sent by the first user equipment. When the second user equipment fails to receive the D2D signal in the first target resource pool, the second user equipment receives the D2D signal in the second target resource pool of the second resource pool. There is a correspondence between the first target resource pool and the second target resource pool. For a D2D signal that is not received in the first target resource pool, the second user equipment may receive the D2D signal in the second target resource pool of the second resource pool, and does not need to receive the D2D signal in each resource pool of the second resource pool. In this way, receive power of the second user equipment is reduced.

To facilitate understanding, the following describes a signal transmission method in an embodiment of the present invention by using an actual application scenario.

A base station configures an SA resource pool W and a D2D data signal resource pool X in an uplink frequency, configures an SA resource pool Y and a D2D data signal resource pool Z in a downlink frequency, binds the resource pool W and the resource pool Y, and binds the resource pool X and the resource pool Z. That is, an SA signal received by the base station in W can be sent only by using Y, and data received in X can be sent only by using Z.

A user A is to send an "instructional video" file to a user B. The user A searches for, by using a mobile phone a, an uplink frequency for communicating with the base station, then sends an SA signal of the "instructional video" file in the SA resource pool W, and sends the "instructional video" file in the D2D data signal resource pool X. The base station receives the SA signal in the SA resource pool W, receives the "instructional video" file in the D2D data signal resource pool X, sends the SA signal to the user Bin the SA resource pool Y, and sends the "instructional video" file to the user B in the D2D data signal resource pool Z. The user B searches for a downlink frequency by using a mobile phone b, then receives the SA signal in the SA resource pool Y, and receives, in the D2D data signal resource pool Z according to the SA signal, the "instructional video" file corresponding to the SA signal.

The foregoing describes a signal transmission method in an embodiment of the present invention, and the following describes a base station in an embodiment of the present invention. Referring to FIG. 7, an embodiment of the base station in this embodiment of the present invention includes:
a first configuration module 701, configured to configure a first resource pool in an uplink frequency;
a second configuration module 702, configured to configure a second resource pool in a downlink frequency;
a receiving module 703, configured to receive, in the first resource pool configured by the first configuration module 701, a D2D signal sent by first user equipment, where the D2D signal includes one or any combination of a scheduling assignment SA signal, a D2D data signal, or a D2D discovery signal; and
a sending module 704, configured to send, in the second resource pool configured by the second configuration module 702, the D2D signal received by the receiving module 703 to second user equipment.

In this embodiment of the present invention, the first configuration module 701 configures the first resource pool in the uplink frequency, the second configuration module 702 configures the second resource pool in the downlink frequency, the receiving module 703 receives, in the first resource pool, the D2D signal sent by the first user equipment, and the sending module 704 sends the D2D signal to the second user equipment in the second resource pool. The D2D signal is relayed and forwarded by the base station, so that UE in a signal coverage area of the base station can receive the D2D signal in the second resource pool. Because transmit power of the base station is greater than transmit power of the UE, UE in a larger area can receive the D2D signal by using the base station, that is, even if the UE does not use maximum transmit power, another UE can receive the D2D signal by using the base station. In the method, transmit power of UE can be controlled, interference is reduced, and a D2D signal receiving area is expanded.

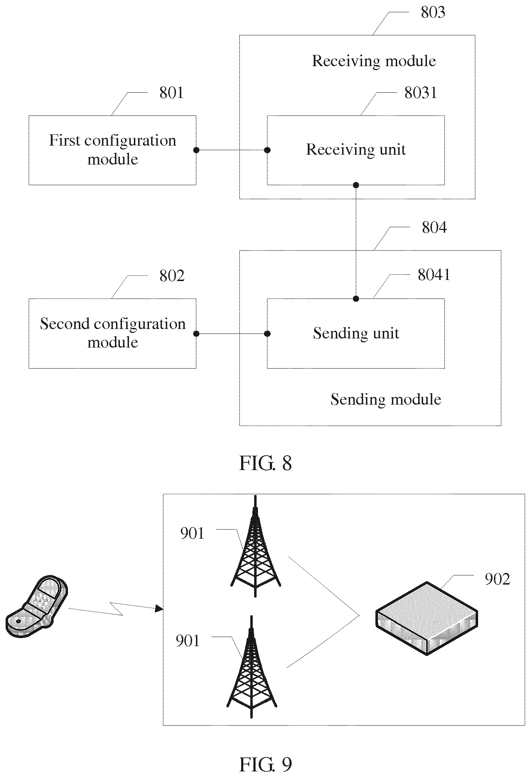

To facilitate understanding, the following describes a base station in detail in an embodiment of the present invention. Referring to FIG. 8, another embodiment of the base station in this embodiment of the present invention includes:
a first configuration module 801, configured to configure a first resource pool in an uplink frequency, where the first resource pool includes a first target resource pool;
a second configuration module 802, configured to configure a second resource pool in a downlink frequency, where the second resource pool includes a second target resource pool;
a receiving module 803, configured to receive, in the first resource pool configured by the first configuration module 801, a D2D signal sent by first user equipment, where the D2D signal includes one or any combination of a scheduling assignment SA signal, a D2D data signal, or a D2D discovery signal; and
a sending module 804, configured to send, in the second resource pool configured by the second configuration module 802, the D2D signal received by the receiving module 803 to second user equipment.

The receiving module 803 includes:
a receiving unit 8031, configured to receive, in the first target resource pool of the first resource pool, the D2D signal sent by the first user equipment.

The sending module 804 includes:
a sending unit 8041, configured to send the D2D signal to the second user equipment in the second target resource pool of the second resource pool.

In this embodiment of the present invention, the first configuration module 801 configures the first resource pool in the uplink frequency, the second configuration module 802 configures the second resource pool in the downlink frequency, the receiving module 803 receives, in the first resource pool, the D2D signal sent by the first user equipment, and the sending module 804 sends the D2D signal to the second user equipment in the second resource pool. The D2D signal is relayed and forwarded by the base station, so that UE in a signal coverage area of the base station can receive the D2D signal in the second resource pool. Because transmit power of the base station is greater than transmit power of the UE, UE in a larger area can receive the D2D signal by using the base station, that is, even if the UE does not use maximum transmit power, another UE can receive the D2D signal by using the base station. In the method, transmit power of UE can be controlled, interference is reduced, and a D2D signal receiving area is expanded.

In addition, this embodiment of the present invention provides a specific manner in which the receiving module 803 and the sending module 804 of the base station forward the D2D signal, thereby improving feasibility of this solution.

To facilitate understanding, the following describes interaction between modules of the base station in this embodiment of the present invention by using a specific application scenario.

The first configuration module 801 configures the first resource pool in the uplink frequency. It should be noted that the uplink frequency is a frequency used by user equipment to send a signal to the base station. A resource pool is an access point provided for a user during communication by using an air interface channel. The first resource pool includes the first target resource pool, and may further include another resource pool. This is not specifically limited herein.

The second configuration module 802 configures the second resource pool in the downlink frequency. It should be noted that the downlink frequency is a frequency used by the base station to send a signal to the user equipment. It should be further noted that the second resource pool includes the second target resource pool, and may further include another resource pool. This is not specifically limited herein.

After the first configuration module 801 and the second configuration module 802 configure the first resource pool and the second resource pool, the first user equipment sends the D2D signal in the first target resource pool of the first resource pool, and the receiving unit 8031 of the receiving module 803 receives, in the first target resource pool of the first resource pool, the D2D signal sent by the first user equipment.

It should be noted that the D2D signal is a communication signal from user equipment to user equipment, and is used for direct communication between user equipments. The D2D signal includes one or any combination of a scheduling assignment SA signal, a D2D data signal, or a D2D discovery signal. The first target resource pool is a first SA resource pool, a first D2D data signal resource pool, or a first D2D discovery signal resource pool. Specifically, the base station receives the SA signal in the first SA resource pool of the first resource pool, or receives the D2D data signal in the first D2D data signal resource pool of the first resource pool, or receives the D2D discovery signal in the first D2D discovery signal resource pool of the first resource pool.

After the receiving unit 8031 of the receiving module 803 receives the D2D signal in the first target resource pool, the sending unit 8041 of the sending module 804 sends the D2D signal to the second user equipment in the second target resource pool of the second resource pool, so that the second user equipment can receive the D2D signal in the second resource pool.

It should be noted that the second target resource pool is a second SA resource pool, a second D2D data signal resource pool, or a second D2D discovery signal resource pool. There may be a correspondence between the second target resource pool and the first target resource pool. The correspondence may be a one-to-one mapping relationship, or may be a one-to-many mapping relationship. This is not specifically limited herein. Specifically, the receiving unit 8031 sends the SA signal to the second user equipment in the second SA resource pool of the second resource pool, or sends the D2D data signal to the second user equipment in the second D2D data signal resource pool of the second resource pool, or sends the D2D discovery signal to the second user equipment in the second D2D discovery signal resource pool of the second resource pool.

The foregoing describes a base station in an embodiment of the present invention from a perspective of a modular function entity. The following describes a base station in an embodiment of the present invention from a perspective of hardware processing. Referring to FIG. 9, another embodiment of a base station 900 in an embodiment of the present invention includes: a base transceiver station (BTS, Base Transceiver Station) 901 and a base station controller (BSC, Base Station Controller) 902.

The BSC is a connection point between the BTS and a mobile switching center, and provides an interface for exchanging information between the BTS and the mobile switching center. One base station controller generally controls several base transceiver stations. A main function of the base station controller is to manage a radio channel, implement a call, set up and tear down a communications link, and control cross-cell handover of a mobile station in this control area.

The BTS is controlled by the BSC, and serves a wireless transceiver device of a cell to complete conversion between the BSC and the radio channel, so as to implement related control functions and radio transmission between the BTS and a mobile station by using an air interface. The functions include conversion between wireless transmission and wired transmission, wireless diversity, radio channel encryption, frequency hopping, and the like. A whole BTS includes a wireless transmitting/receiving device, an antenna, and a signal processing part peculiar to all radio interfaces.

In this embodiment of the present invention, the BSC performs the following procedures: configuring a first resource pool in an uplink frequency; and configuring a second resource pool in a downlink frequency.

The BTS performs the following procedures: receiving, in the first resource pool, a D2D signal sent by first user equipment; and sending the D2D signal to second user equipment in the second resource pool, where the D2D signal includes one or any combination of a scheduling assignment SA signal, a D2D data signal, or a D2D discovery signal.

In another embodiment of the base station in this embodiment of the present invention, the first resource pool includes a first target resource pool, and the second resource pool includes a second target resource pool. The BTS specifically performs the following procedures: receiving, in the first target resource pool of the first resource pool, the D2D signal sent by the first user equipment; and sending the D2D signal to the second user equipment in the second target resource pool of the second resource pool.

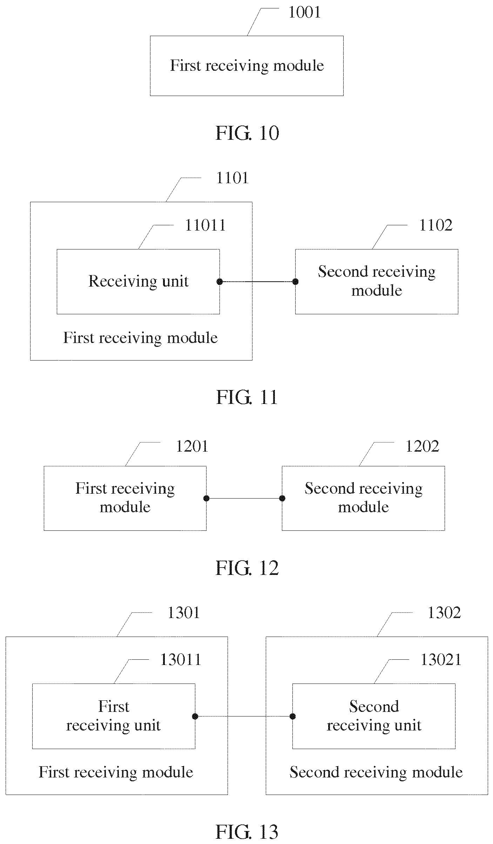

The foregoing describes a base station in an embodiment of the present invention, and the following describes user equipment in an embodiment of the present invention. Referring to FIG. 10, an embodiment of the user equipment in this embodiment of the present invention includes:
a first receiving module 1001, configured to receive, in a second resource pool, a D2D signal sent by first user equipment in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency.

In this embodiment of the present invention, the first receiving module 1001 may receive, in the second resource pool, the D2D signal sent by the first user equipment in the first resource pool and forwarded by the base station. Because transmit power of the base station is greater than transmit power of the first user equipment, even if the transmit power of the first user equipment is relatively low, and the D2D signal sent in the first resource pool cannot arrive at the second user equipment, the second user equipment can receive, in the second resource pool, the D2D signal forwarded by the base station. In this solution, the transmit power of the first user equipment can be controlled, interference from the first user equipment to the base station is reduced, and a D2D signal receiving area of the second user equipment can be expanded.

To facilitate understanding, the following describes user equipment in detail in an embodiment of the present invention. Referring to FIG. 11, another embodiment of the user equipment in this embodiment of the present invention includes:
a first receiving module 1101, configured to receive, in a second resource pool, a D2D signal sent by first user equipment in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency; and
a second receiving module 1102, configured to receive, in the first resource pool, the D2D signal sent by the first user equipment.

Optionally, the first receiving module 1101 includes:
a receiving unit 11011, configured to receive, in a second target resource pool of the second resource pool, the D2D signal sent by the first user equipment in a first target resource pool of the first resource pool and forwarded by the base station.

In this embodiment of the present invention, the first receiving module 1101 may receive, in the second resource pool, the D2D signal sent by the first user equipment in the first resource pool and forwarded by the base station. Because transmit power of the base station is greater than transmit power of the first user equipment, even if the transmit power of the first user equipment is relatively low, and the signal sent in the first resource pool cannot arrive at the second user equipment, the second user equipment can receive, in the second resource pool, the D2D signal forwarded by the base station. In this solution, the transmit power of the first user equipment can be controlled, interference from the first user equipment to the base station is reduced, and a D2D signal receiving area of the second user equipment can be expanded.

In addition, in this embodiment of the present invention, to ensure that the second user equipment can receive the D2D signal, the second receiving module 1102 of the second user equipment may receive, in the first resource pool, the D2D signal sent by the first user equipment. In this way, a case in which the second user equipment cannot receive the D2D signal because of failing forwarding of the base station can be avoided, thereby improving flexibility of this solution.

The following describes another user equipment in an embodiment of the present invention. Referring to FIG. 12, another embodiment of the user equipment in this embodiment of the present invention includes:
a first receiving module 1201, configured to receive, in a first resource pool, a D2D signal sent by first user equipment, where the D2D signal includes one or any combination of a scheduling assignment SA signal, a D2D data signal, or a D2D discovery signal, and the first resource pool is a resource pool configured by a base station in an uplink frequency; and
a second receiving module 1202, configured to: when the first receiving module 1201 fails to receive, in the first resource pool, the D2D signal sent by the first user equipment, receive, in a second resource pool, the D2D signal sent by the first user equipment in the first resource pool and forwarded by the base station, where the second resource pool is a resource pool configured by the base station in a downlink frequency.

In this embodiment of the present invention, the first receiving module 1201 receives, in the first resource pool, the D2D signal sent by the first user equipment. When the first receiving module 1201 fails to receive, in the first resource pool, the D2D signal sent by the first user equipment, the second receiving module 1202 then receives, in the second resource pool, the D2D signal sent by the first user equipment in the first resource pool and forwarded by the base station. That is, even if transmit power of the first user equipment is relatively low, and the D2D signal sent in the first resource pool cannot arrive at the second user equipment, the second user equipment can receive, in the second resource pool, the D2D signal forwarded by the base station. In this solution, the transmit power of the first user equipment can be controlled, interference from the first user equipment to the base station is reduced, and a D2D signal receiving area of the second user equipment can be expanded.

To facilitate understanding, the following describes another user equipment in detail in an embodiment of the present invention. Referring to FIG. 13, another embodiment of the user equipment in this embodiment of the present invention includes:
a first receiving module 1301, configured to receive, in a first resource pool, a D2D signal sent by first user equipment, where the D2D signal includes one or any combination of a scheduling assignment SA signal, a D2D data signal, or a D2D discovery signal, and the first resource pool is a resource pool configured by a base station in an uplink frequency; and
a second receiving module 1302, configured to: when the first receiving module 1301 fails to receive, in the first resource pool, the D2D signal sent by the first user equipment, receive, in a second resource pool, the D2D signal sent by the first user equipment in the first resource pool and forwarded by the base station, where the second resource pool is a resource pool configured by the base station in a downlink frequency, and the second resource pool includes a second target resource pool.

The first receiving module 1301 includes:
a first receiving unit 13011, configured to receive, in a first target resource pool of the first resource pool, the D2D signal sent by the first user equipment.

The second receiving module 1302 includes:
a second receiving unit 13021, configured to: when the first receiving unit 13011 fails to receive, in the first target resource pool, the D2D signal sent by the first user equipment, receive, in the second target resource pool of the second resource pool, the D2D signal sent by the first user equipment in the first target resource pool of the first resource pool and forwarded by the base station.

In this embodiment of the present invention, the first receiving module 1301 receives, in the first resource pool, the D2D signal sent by the first user equipment. When the first receiving module 1301 fails to receive, in the first resource pool, the D2D signal sent by the first user equipment, the second receiving module 1302 then receives, in the second resource pool, the D2D signal sent by the first user equipment in the first resource pool and forwarded by the base station. That is, for a D2D signal that cannot be sent by the first user equipment to the second user equipment in the first resource pool, the second user equipment may receive, in the second resource pool, the signal forwarded by the base station, so that a D2D signal receiving area of the second user equipment is expanded.

In addition, in this embodiment of the present invention, there is a correspondence between the first target resource pool and the second target resource pool. For a D2D signal that is not received by the first receiving unit 13011 in the first target resource pool, the second receiving unit 13021 may receive the D2D signal in the second target resource pool of the second resource pool, and does not need to receive the D2D signal in each resource pool of the second resource pool, so that receive power of the second user equipment is reduced.

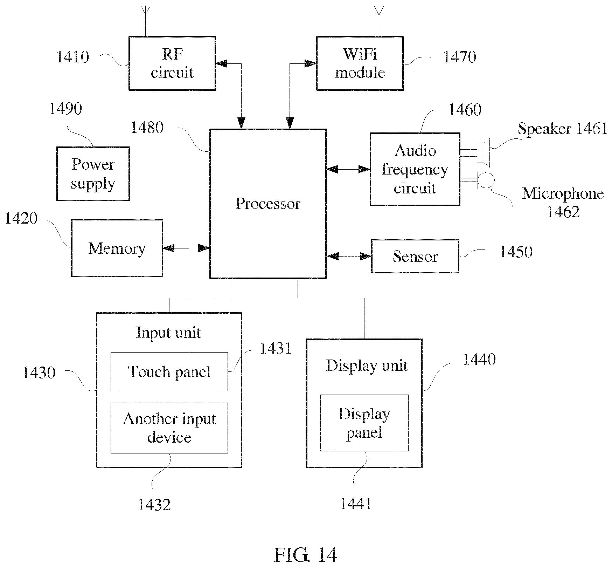

The foregoing describes two types of user equipment in an embodiment of the present invention from a perspective of a modular function entity. The two types of user equipment may be user equipment such as a mobile phone, a tablet computer, or a PDA (Personal Digital Assistant, personal digital assistant). The following uses a mobile phone as an example. Referring to FIG. 14, the mobile phone includes components such as a radio frequency (Radio Frequency, RF) circuit 1410, a memory 1420, an input unit 1430, a display unit 1440, a sensor 1450, an audio frequency circuit 1460, a wireless fidelity (wireless fidelity, WiFi) module 1470, a processor 1480, and a power supply 1490. A person skilled in the art may understand that the structure of the mobile phone shown in FIG. 14 imposes no limitation on the mobile phone, and the mobile phone may include more or fewer components than those shown in the diagram, or a combination of some components, or different component arrangements.

The following provides detailed description of all the components of the mobile phone with reference to FIG. 14.

The RF circuit 1410 may be configured to receive and send information, or to receive and send a signal in a call process. In particular, after receiving downlink information of a base station, the RF circuit 1410 sends the downlink information to the processor 1480 for processing, and sends related uplink data to the base station. Generally, the RF circuit 1410 includes but is not limited to an antenna, at least one amplifier, a transceiver, a coupler, a low noise amplifier (Low Noise Amplifier, LNA), a duplexer, and the like. In addition, the RF circuit 1410 may further communicate with a network and another device by means of wireless communication. Any communications standard or protocol may be used for the wireless communication, including but not limited to Global System for Mobile Communications (Global System for Mobile communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Message Service, SMS), and the like.

The memory 1420 may be configured to store a software program and a module. By running the software program and the module stored in the memory 1420, the processor 1480 executes various functional applications of the mobile phone and data processing. The memory 1420 may mainly include a program storage area and a data storage area. The program storage area may store an operating system, an application program required by at least one function (such as a sound play function or an image play function), and the like, and the data storage area may store data (such as audio frequency data or a phonebook) created according to use of the mobile phone, and the like. In addition, the memory 1420 may include a high-speed random access memory, and may further include a nonvolatile memory, such as at least one magnetic disk storage component, a flash memory component, or another volatile solid-state storage component.

The input unit 1430 may be configured to: receive entered digital or character information, and generate key signal input related to a user setting and function control of the mobile phone. Specifically, the input unit 1430 may include a touch panel 1431 and another input device 1432. The touch panel 1431 is also referred to as a touchscreen and may collect a touch operation performed by a user on or near the touch panel 1431 (such as an operation performed by the user on the touch panel 1431 or near the touch panel 1431 by using any proper object or accessory, such as a finger or a stylus), and drive a corresponding connection apparatus according to a preset program. Optionally, the touch panel 1431 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 1480, and can receive and execute a command sent by the processor 1480. In addition, the touch panel 1431 may be, for example, a resistive, capacitive, infrared, or surface acoustic touch panel. In addition to the touch panel 1431, the input unit 1430 may include another input device 1432. Specifically, the another input device 1432 may include but is not limited to one or more of a physical keyboard, a function key (such as a volume control key or an on/off key), a trackball, a mouse, an operating lever, or the like.

The display unit 1440 may be configured to display information entered by the user or information provided for the user and various menus of the mobile phone. The display unit 1440 may include a display panel 1441. Optionally, the display panel 1441 may be configured by using a liquid crystal display (Liquid Crystal Display, LCD), an organic light-emitting diode (Organic Light-Emitting Diode, OLED), or the like. Further, the touch panel 1431 may cover the display panel 1441. When detecting a touch operation on or near the touch panel 1431, the touch panel 1431 transmits the touch operation to the processor 1480 to determine a type of a touch event, and then the processor 1480 provides corresponding visual output on the display panel 1441 according to the type of the touch event. In FIG. 14, the touch panel 1431 and the display panel 1441 are used as two independent components to implement input and output functions of the mobile phone. However, in some embodiments, the touch panel 1431 and the display panel 1441 may be integrated to implement the input and output functions of the mobile phone.

The mobile phone may further include at least one sensor 1450, such as a light sensor, a motion sensor, or another sensor. Specifically, the light sensor may include an ambient light sensor and a proximity sensor. The ambient light sensor may adjust luminance of the display panel 1441 according to brightness of ambient light, and the proximity sensor may turn off the display panel 1441 and/or backlight when the mobile phone moves to an ear. As a type of the motion sensor, an acceleration sensor may detect acceleration values in all directions (generally, three axes), may detect a value and a direction of gravity in a static mode, and may be applied to an application used for identifying a mobile phone posture (for example, screen switching between a landscape mode and a portrait mode, a related game, or magnetometer posture calibration), a function related to vibration identification (such as a pedometer or a knock), and the like. Other sensors such as a gyroscope, a barometer, a hygrometer, a thermometer, and an infrared sensor may be disposed on the mobile phone, and details are not described herein.

The audio frequency circuit 1460, a speaker 1461, and a microphone 1462 may provide an audio frequency interface between the user and the mobile phone. The audio frequency circuit 1460 may convert received audio frequency data into an electrical signal, and transmit the electrical signal to the speaker 1461, and the speaker 1461 converts the electrical signal into a voice signal for output. In addition, the microphone 1462 converts a collected voice signal into an electrical signal, the audio frequency circuit 1460 receives the electrical signal, converts the electrical signal into audio frequency data, and outputs the audio frequency data to the processor 1480 for processing, so as to send the audio frequency data to, for example, another mobile phone, by using the RF circuit 1410, or output the audio frequency data to the memory 1420 for further processing.

WiFi is a short-distance wireless transmission technology. The mobile phone may help, by using the WiFi module 1470, the user to receive and send an email, browse a web page, access streaming media, and the like. The WiFi module 1470 provides wireless broadband Internet access for the user. Although the WiFi module 1470 is shown in FIG. 14, it may be understood that the WiFi module is not a mandatory component of the mobile phone, and may be omitted as required without changing a scope of the essence of the present invention.

The processor 1480 is a control center of the mobile phone, and uses various interfaces and lines to connect all parts of the entire mobile phone. By running or executing a software program and/or a module stored in the memory 1420 and invoking data stored in the memory 1420, the processor 1480 executes various functions of the mobile phone and data processing, so as to perform overall monitoring on the mobile phone. Optionally, the processor 1480 may include one or more processing units. Preferably, an application processor and a modem processor may be integrated into the processor 1480. The application processor mainly processes an operating system, a user screen, an application program, and the like; and the modem processor mainly processes wireless communication. It may be understood that the modem processor may not be integrated into the processor 1480. The mobile phone further includes the power supply 1490 (such as a battery) that supplies power to each component. Preferably, the power supply may be logically connected to the processor 1480 by using a power management system, so as to implement functions such as charging management, discharging management, and power consumption management by using the power management system.

Although not shown, the mobile phone may further include a camera, a Bluetooth module, and the like. Details are not described herein.

In this embodiment of the present invention, the RF circuit 1410 included in the user equipment performs the following procedure:
receiving, in a second resource pool, a D2D signal sent by first user equipment in a first resource pool and forwarded by a base station, where the D2D signal includes one or any combination of a scheduling assignment SA signal, a D2D data signal, or a D2D discovery signal, the first resource pool is a resource pool configured by the base station in an uplink frequency, and the second resource pool is a resource pool configured by the base station in a downlink frequency.

In another embodiment of the user equipment in this embodiment of the present invention, the RF circuit 1410 specifically performs the following procedures: receiving, in the second resource pool, the D2D signal sent by the first user equipment in the first resource pool and forwarded by the base station; and receiving, in the first resource pool, the D2D signal sent by the first user equipment.

In another embodiment of the user equipment in this embodiment of the present invention, the first resource pool may include a first target resource pool, and the second resource pool may include a second target resource pool. The RF circuit 1410 specifically performs the following procedures: receiving, in the second target resource pool of the second resource pool, the D2D signal sent by the first user equipment in the first target resource pool of the first resource pool and forwarded by the base station; and receiving, in the first target resource pool of the first resource pool, the D2D signal sent by the first user equipment.

In another embodiment of the user equipment in this embodiment of the present invention, the RF circuit 1410 performs the following procedures: receiving, in a first resource pool, a D2D signal sent by first user equipment, where the D2D signal includes one or any combination of a scheduling assignment SA signal, a D2D data signal, or a D2D discovery signal, and the first resource pool is a resource pool configured by a base station in an uplink frequency; and when the RF circuit 1410 fails to receive, in the first resource pool, the D2D signal sent by the first user equipment, receiving, in a second resource pool, the D2D signal sent by the first user equipment in the first resource pool and forwarded by the base station, where the second resource pool is a resource pool configured by the base station in a downlink frequency.

In another embodiment of the user equipment in this embodiment of the present invention, the first resource pool includes a first target resource pool, and the second resource pool includes a second target resource pool. The RF circuit specifically performs the following procedures: receiving, in the first target resource pool of the first resource pool, the D2D signal sent by the first user equipment; and when the RF circuit fails to receive the D2D signal in the first target resource pool, receiving, in the second target resource pool of the second resource pool, the D2D signal sent by the first user equipment in the first target resource pool of the first resource pool and forwarded by the base station.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. The signal transmission method, the base station, and the user equipment provided in the embodiments of the present invention are described in detail above. The principle and implementation of the present invention are described herein by using specific examples. The description about the embodiments of the present invention is merely provided to help understand the method and core ideas of the present invention. In addition, a person skilled in the art can make variations and modifications to the present invention in terms of the specific implementations and application scopes according to the ideas of the embodiments of the present invention. Therefore, the content of specification shall not be construed as a limitation on the present invention.

## Claims

1. A signal transmission method, comprising:
configuring (101, 201), by a base station, a first resource pool in an uplink frequency;
configuring (102, 202), by the base station, a second resource pool in a downlink frequency, wherein the first resource pool comprises a first target resource pool, the second resource pool comprises a second target resource pool;
receiving (203), by the base station in the first target resource pool of the first resource pool, a device-to-device, D2D, signal sent by first user equipment, UE, wherein the D2D signal comprises one or any combination of a scheduling assignment, SA, signal, a D2D data signal, or a D2D discovery signal; and
sending (204), by the base station, the D2D signal to second UE in the second target resource pool of the second resource pool,
wherein the first target resource pool is corresponding to the second target resource pool, and the D2D signal received by the base station in the first target resource pool is sent to the second UE in the second target resource pool, so that the second UE receives the D2D signal in the second resource pool according to a correspondence between the first target resource pool and the second target resource pool; and
wherein the first target resource pool is a first SA resource pool, a first D2D data signal resource pool, or a first D2D discovery signal resource pool; and
the second target resource pool is a second SA resource pool, a second D2D data signal resource pool, or a second D2D discovery signal resource pool.

2. A signal transmission method, comprising:
receiving (401), by second user equipment, UE, in a second resource pool, a device-to-device, D2D, signal sent by first UE in a first resource pool and forwarded by a base station, wherein the D2D signal comprises one or any combination of a scheduling assignment, SA, signal, a D2D data signal, or a D2D discovery signal, the first resource pool is a resource pool configured by the base station in an uplink frequency, and the second resource pool is a resource pool configured by the base station in a downlink frequency;
wherein the first resource pool comprises a first target resource pool, the second resource pool comprises a second target resource pool, and the receiving, by second UE in a second resource pool, a D2D signal sent by first UE in a first resource pool and forwarded by a base station comprises:
receiving (603), by the second UE in the second target resource pool of the second resource pool, the D2D signal sent by the first UE in the first target resource pool of the first resource pool and forwarded by the base station;
wherein the first target resource pool is a first SA resource pool, a first D2D data signal resource pool, or a first D2D discovery signal resource pool, and the second target resource pool is a second scheduling assignment SA resource pool, a second D2D data signal resource pool, or a second D2D discovery signal resource pool; and
wherein the first target resource pool is corresponding to the second target resource pool, and the D2D signal received by the base station in the first target resource pool is sent to the second UE in the second target resource pool, so that the second UE receives the D2D signal in the second resource pool according to a correspondence between the first target resource pool and the second target resource pool.

3. A base station, comprising:
a first configuration module (701, 801), adapted to configure a first resource pool in an uplink frequency;
a second configuration module (702, 802), adapted to configure a second resource pool in a downlink frequency;
a receiving module (803), configured to receive, in the first resource pool configured by the first configuration module, a device-to-device, D2D, signal sent by first user equipment, UE, wherein the D2D signal comprises one or any combination of a scheduling assignment, SA, signal, a D2D data signal, or a D2D discovery signal; and
a sending module (804), configured to send, in the second resource pool configured by the second configuration module, the D2D signal received by the receiving module to second UE;
wherein the first resource pool comprises a first target resource pool, and the second resource pool comprises a second target resource pool;
the receiving module (803) comprises:
a receiving unit (8031), configured to receive, in the first target resource pool of the first resource pool, the D2D signal sent by the first UE; and
the sending module (804) comprises:
a sending unit (8041), configured to send the D2D signal to the second UE in the second target resource pool of the second resource pool;
wherein the first target resource pool is corresponding to the second target resource pool, and the D2D signal received by the base station in the first target resource pool is sent to the second UE in the second target resource pool, so that the second UE receives the D2D signal in the second resource pool according to a correspondence between the first target resource pool and the second target resource pool; and
wherein the first target resource pool is a first SA resource pool, a first D2D data signal resource pool, or a first D2D discovery signal resource pool; and
the second target resource pool is a second SA resource pool, a second D2D data signal resource pool, or a second D2D discovery signal resource pool.

4. User equipment, UE, comprising:
a first receiving module (1101), configured to receive, in a second resource pool, a device-to-device, D2D, signal sent by first UE in a first resource pool and forwarded by a base station, wherein the D2D signal comprises one or any combination of a scheduling assignment, SA, signal, a D2D data signal, or a D2D discovery signal, the first resource pool is a resource pool configured by the base station in an uplink frequency, and the second resource pool is a resource pool configured by the base station in a downlink frequency;
wherein the first resource pool comprises a first target resource pool, and the second resource pool comprises a second target resource pool; and
the first receiving module (1101) comprises:
a receiving unit (11011), configured to receive, in the second target resource pool of the second resource pool, the D2D signal sent by the first UE in the first target resource pool of the first resource pool and forwarded by the base station;
wherein the first target resource pool is corresponding to the second target resource pool, and the D2D signal received by the base station in the first target resource pool is sent to the second UE in the second target resource pool, so that the second UE receives the D2D signal in the second resource pool according to a correspondence between the first target resource pool and the second target resource pool; and
wherein the first target resource pool is a first SA resource pool, a first D2D data signal resource pool, or a first D2D discovery signal resource pool; and
the second target resource pool is a second SA resource pool, a second D2D data signal resource pool, or a second D2D discovery signal resource pool.

5. The UE according to claim 4, wherein the UE further comprises:
a second receiving module (1102), configured to receive, in the first resource pool, the D2D signal sent by the first UE.

## Patentansprüche

1. Signalübertragungsverfahren, umfassend:
Konfigurieren (101, 201) eines ersten Ressourcenpools in einer Aufwärtsstreckenfrequenz durch eine Basisstation;
Konfigurieren (102, 202) eines zweiten Ressourcenpools in einer Abwärtsstreckenfrequenz durch die Basisstation, wobei der erste Ressourcenpool einen ersten Zielressourcenpool umfasst, der zweite Ressourcenpool einen zweiten Zielressourcenpool umfasst;
Empfangen (203) eines von einem ersten Benutzergerät, UE, gesendeten Vorrichtung-zu-Vorrichtung, D2D,-Signals durch die Basisstation in dem ersten Zielressourcenpool des ersten Ressourcenpools, wobei das D2D-Signal eine oder eine beliebige Kombination eines Planungszuweisungs, SA,-Signals, eines D2D-Datensignals oder eines D2D-Entdeckungssignals umfasst; und
Senden (204) des D2D-Signals an das zweite UE in dem zweiten Zielressourcenpool des zweiten Ressourcenpools durch die Basisstation,
wobei der erste Zielressourcenpool dem zweiten Zielressourcenpool entspricht und das von der Basisstation in dem ersten Zielressourcenpool empfangene D2D-Signal an das zweite UE in dem zweiten Zielressourcenpool gesendet wird, so dass das zweite UE das D2D-Signal in dem zweiten Ressourcenpool gemäß einer Entsprechung zwischen dem ersten Zielressourcenpool und dem zweiten Zielressourcenpool empfängt; und
wobei der erste Zielressourcenpool ein erster SA-Ressourcenpool, ein erster D2D-Datensignalressourcenpool oder ein erster D2D-Entdeckungssignalressourcenpool ist; und
der zweite Zielressourcenpool ein zweiter SA-Ressourcenpool, ein zweiter D2D-Datensignalressourcenpool oder ein zweiter D2D-Entdeckungssignalressourcenpool ist.

2. Signalübertragungsverfahren, umfassend:
Empfangen (401) eines von einem ersten UE in einem ersten Ressourcenpool gesendeten und von einer Basisstation weitergeleiteten Vorrichtung-zu-Vorrichtung, D2D,-Signals durch ein zweites Benutzergerät, UE, in einem zweiten Ressourcenpool, wobei das D2D-Signal eine oder eine beliebige Kombination aus einem Planungszuweisungs, SA,-Signal, einem D2D-Datensignal oder einem D2D-Entdeckungssignal umfasst, wobei der erste Ressourcenpool ein Ressourcenpool ist, der von der Basisstation in einer Aufwärtsstreckenfrequenz konfiguriert wird, und der zweite Ressourcenpool ein Ressourcenpool ist, der von der Basisstation in einer Abwärtsstreckenfrequenz konfiguriert wird;
wobei der erste Ressourcenpool einen ersten Zielressourcenpool umfasst, der zweite Ressourcenpool einen zweiten Zielressourcenpool umfasst und das Empfangen eines von einem ersten UE in einem ersten Ressourcenpool gesendeten und von einer Basisstation weitergeleiteten D2D-Signals durch ein zweites UE in einem zweiten Ressourcenpool umfasst:
Empfangen (603) des von dem ersten UE in dem ersten Zielressourcenpool des ersten Ressourcenpools gesendeten und von der Basisstation weitergeleiteten D2D-Signals durch das zweite UE in dem zweiten Zielressourcenpool des zweiten Ressourcenpools;
wobei der erste Zielressourcenpool ein erster SA-Ressourcenpool, ein erster D2D-Datensignalressourcenpool oder ein erster D2D-Entdeckungssignalressourcenpool ist und der zweite Zielressourcenpool ein zweiter Planungszuweisungs, SA,-Ressourcenpool, ein zweiter D2D-Datensignalressourcenpool oder ein zweiter D2D-Entdeckungssignalressourcenpool ist; und
wobei der erste Zielressourcenpool dem zweiten Zielressourcenpool entspricht und das von der Basisstation in dem ersten Zielressourcenpool empfangene D2D-Signal an das zweite UE in dem zweiten Zielressourcenpool gesendet wird, so dass das zweite UE das D2D-Signal in dem zweiten Ressourcenpool gemäß einer Entsprechung zwischen dem ersten Zielressourcenpool und dem zweiten Zielressourcenpool empfängt.

3. Basisstation, umfassend:
ein erstes Konfigurationsmodul (701, 801), das angepasst ist, um einen ersten Ressourcenpool in einer Aufwärtsstreckenfrequenz zu konfigurieren;
ein zweites Konfigurationsmodul (702, 802), das angepasst ist, um einen zweiten Ressourcenpool in einer Abwärtsstreckenfrequenz zu konfigurieren;
ein Empfangsmodul (803), das konfiguriert ist, um in dem von dem ersten Konfigurationsmodul konfigurierten ersten Ressourcenpool ein von dem ersten Benutzergerät, UE, gesendetes Vorrichtung-zu-Vorrichtung, D2D,-Signal zu empfangen, wobei das D2D-Signal eine oder eine beliebige Kombination aus einem Planungszuweisungs, SA,-Signal, einem D2D-Datensignal oder einem D2D-Entdeckungssignal umfasst; und
ein Sendemodul (804), das konfiguriert ist, um das von dem Empfangsmodul empfangene D2D-Signal an das zweite UE in dem von dem zweiten Konfigurationsmodul konfigurierten, zweiten Ressourcenpool zu senden;
wobei der erste Ressourcenpool einen ersten Zielressourcenpool umfasst und der zweite Ressourcenpool einen zweiten Zielressourcenpool umfasst;
wobei das Empfangsmodul (803) umfasst:
eine Empfangseinheit (8031), die konfiguriert ist, um das vom ersten UE gesendete D2D-Signal in dem ersten Zielressourcenpool des ersten Ressourcenpools zu empfangen; und
wobei das Sendemodul (804) umfasst:
eine Sendeeinheit (8041), die konfiguriert ist, um das D2D-Signal an das zweite UE in dem zweiten Zielressourcenpool des zweiten Ressourcenpools zu senden;
wobei der erste Zielressourcenpool dem zweiten Zielressourcenpool entspricht und das von der Basisstation in dem ersten Zielressourcenpool empfangene D2D-Signal an das zweite UE in dem zweiten Zielressourcenpool gesendet wird, so dass das zweite UE das D2D-Signal in dem zweiten Ressourcenpool gemäß einer Entsprechung zwischen dem ersten Zielressourcenpool und dem zweiten Zielressourcenpool empfängt; und
wobei der erste Zielressourcenpool ein erster SA-Ressourcenpool, ein erster D2D-Datensignalressourcenpool oder ein erster D2D-Entdeckungssignalressourcenpool ist; und
der zweite Zielressourcenpool ein zweiter SA-Ressourcenpool, ein zweiter D2D-Datensignalressourcenpool oder ein zweiter D2D-Entdeckungssignalressourcenpool ist.

4. Benutzergerät, UE, umfassend:
ein erstes Empfangsmodul (1101), das konfiguriert ist, um ein von einem ersten UE in einem ersten Ressourcenpool gesendetes und von einer Basisstation weitergeleitetes Vorrichtung-zu-Vorrichtung, D2D,-Signal in einem zweiten Ressourcenpool zu empfangen, wobei das D2D-Signal eine oder eine beliebige Kombination aus einem Planungszuweisungs, SA,-Signal, einem D2D-Datensignal oder einem D2D-Entdeckungssignal umfasst, wobei der erste Ressourcenpool ein Ressourcenpool ist, der von der Basisstation in einer Aufwärtsstreckenfrequenz konfiguriert wird, und der zweite Ressourcenpool ein Ressourcenpool ist, der von der Basisstation in einer Abwärtsstreckenfrequenz konfiguriert wird;
wobei der erste Ressourcenpool einen ersten Zielressourcenpool umfasst und der zweite Ressourcenpool einen zweiten Zielressourcenpool umfasst; und
wobei das erste Empfangsmodul (1101) umfasst:
eine Empfangseinheit (11011), die konfiguriert ist, um das von dem ersten UE in dem ersten Zielressourcenpool des ersten Ressourcenpools gesendete und von der Basisstation weitergeleitete D2D-Signal in dem zweiten Zielressourcenpool des zweiten Ressourcenpools zu empfangen;
wobei der erste Zielressourcenpool dem zweiten Zielressourcenpool entspricht und das von der Basisstation in dem ersten Zielressourcenpool empfangene D2D-Signal an das zweite UE in dem zweiten Zielressourcenpool gesendet wird, so dass das zweite UE das D2D-Signal in dem zweiten Ressourcenpool gemäß einer Entsprechung zwischen dem ersten Zielressourcenpool und dem zweiten Zielressourcenpool empfängt; und
wobei der erste Zielressourcenpool ein erster SA-Ressourcenpool, ein erster D2D-Datensignalressourcenpool oder ein erster D2D-Entdeckungssignalressourcenpool ist; und
der zweite Zielressourcenpool ein zweiter SA-Ressourcenpool, ein zweiter D2D-Datensignalressourcenpool oder ein zweiter D2D-Erkennungssignalressourcenpool ist.

5. UE nach Anspruch 4, wobei das UE ferner umfasst:
ein zweites Empfangsmodul (1102), das konfiguriert ist, um das von dem ersten UE gesendete D2D-Signal in dem ersten Ressourcenpool zu empfangen.

## Revendications

1. Procédé de transmission de signal, comprenant :
configuration (101, 201), par une station de base, d'un premier groupe de ressources dans une fréquence de liaison montante ;
configuration (102, 202), par la station de base, d'un deuxième groupe de ressources dans une fréquence de liaison descendante, le premier groupe de ressources comprenant un premier groupe de ressources cibles, le deuxième groupe de ressources comprenant un deuxième groupe de ressources cibles ;
réception (203), par la station de base dans le premier groupe de ressources cibles du premier groupe de ressources, d'un signal de dispositif à dispositif, D2D, envoyé par un premier équipement d'utilisateur, UE, le signal D2D comprenant un ou toute combinaison d'un signal d'assignation d'ordonnancement, SA, d'un signal de données D2D ou d'un signal de découverte D2D ; et
envoi (204), par la station de base, du signal D2D à un deuxième UE dans le deuxième groupe de ressources cibles du deuxième groupe de ressources,
le premier groupe de ressources cibles correspondant au deuxième groupe de ressources cibles et le signal D2D reçu par la station de base dans le premier groupe de ressources cibles étant envoyé au deuxième UE dans le deuxième groupe de ressources cibles, de sorte que le deuxième UE reçoit le signal D2D dans le deuxième groupe de ressources conformément à une correspondance entre le premier groupe de ressources cibles et le deuxième groupe de ressources cibles ; et
le premier groupe de ressources cibles étant un premier groupe de ressources SA, un premier groupe de ressources de signal de données D2D ou un premier groupe de ressources de signal de découverte D2D ; et
le deuxième groupe de ressources cibles étant un deuxième groupe de ressources SA, un deuxième groupe de ressources de signal de données D2D ou un deuxième groupe de ressources de signal de découverte D2D.

2. Procédé de transmission de signal, comprenant :
réception (401), par un deuxième équipement d'utilisateur, UE, dans un deuxième groupe de ressources, d'un signal de dispositif à dispositif, D2D, envoyé par un premier équipement d'utilisateur, UE, dans un premier groupe de ressources et retransmis par une station de base, le signal D2D comprenant un ou toute combinaison d'un signal d'assignation d'ordonnancement, SA, d'un signal de données D2D ou d'un signal de découverte D2D, le premier groupe de ressources étant un groupe de ressources configuré par la station de base dans une fréquence de liaison montante et le deuxième groupe de ressources étant un groupe de ressources configuré par la station de base dans une fréquence de liaison descendante ;
le premier groupe de ressources comprenant un premier groupe de ressources cibles, le deuxième groupe de ressources comprenant un deuxième groupe de ressources cibles, et la réception, par le deuxième UE dans un deuxième groupe de ressources, d'un signal D2D envoyé par le premier UE dans un premier groupe de ressources et retransmis par une station de base comprend :
réception (603), par le deuxième UE dans le deuxième groupe de ressources cibles du deuxième groupe de ressources, du signal D2D envoyé par le premier UE dans le premier groupe de ressources cibles du premier groupe de ressources et retransmis par la station de base ;
le premier groupe de ressources cibles étant un premier groupe de ressources SA, un premier groupe de ressources de signal de données D2D ou un premier groupe de ressources de signal de découverte D2D, et le deuxième groupe de ressources cibles étant un deuxième groupe de ressources d'assignation d'ordonnancement, SA, un deuxième groupe de ressources de signal de données D2D ou un deuxième groupe de ressources de signal de découverte D2D ; et
le premier groupe de ressources cibles correspondant au deuxième groupe de ressources cibles et le signal D2D reçu par la station de base dans le premier groupe de ressources cibles étant envoyé au deuxième UE dans le deuxième groupe de ressources cibles, de sorte que le deuxième UE reçoit le signal D2D dans le deuxième groupe de ressources conformément à une correspondance entre le premier groupe de ressources cibles et le deuxième groupe de ressources cibles.

3. Station de base, comprenant :
un premier module de configuration (701, 801), adapté pour configurer un premier groupe de ressources dans une fréquence de liaison montante ;
un deuxième module de configuration (702, 802), adapté pour configurer un deuxième groupe de ressources dans une fréquence de liaison descendante ;
un module de réception (803), configuré pour recevoir, dans le premier groupe de ressources configuré par le premier module de configuration, un signal de dispositif à dispositif, D2D, envoyé par un premier équipement d'utilisateur, UE, le signal D2D comprenant un ou toute combinaison d'un signal d'assignation d'ordonnancement, SA, d'un signal de données D2D ou d'un signal de découverte D2D ; et
un module d'envoi (804), configuré pour envoyer, dans le deuxième groupe de ressources configuré par le deuxième module de configuration, le signal D2D reçu par le module de réception à un deuxième UE ;
le premier groupe de ressources comprenant un premier groupe de ressources cibles et le deuxième groupe de ressources comprenant un deuxième groupe de ressources cibles ;
le module de réception (803) comprenant :
une unité de réception (8031), configurée pour recevoir, dans le premier groupe de ressources cibles du premier groupe de ressources, le signal D2D envoyé par le premier UE ; et
le module d'envoi (804) comprenant :
une unité d'envoi (8041), configurée pour envoyer le signal D2D au deuxième UE dans le deuxième groupe de ressources cibles du deuxième groupe de ressources,
le premier groupe de ressources cibles correspondant au deuxième groupe de ressources cibles et le signal D2D reçu par la station de base dans le premier groupe de ressources cibles étant envoyé au deuxième UE dans le deuxième groupe de ressources cibles, de sorte que le deuxième UE reçoit le signal D2D dans le deuxième groupe de ressources conformément à une correspondance entre le premier groupe de ressources cibles et le deuxième groupe de ressources cibles ; et
le premier groupe de ressources cibles étant un premier groupe de ressources SA, un premier groupe de ressources de signal de données D2D ou un premier groupe de ressources de signal de découverte D2D ; et
le deuxième groupe de ressources cibles étant un deuxième groupe de ressources SA, un deuxième groupe de ressources de signal de données D2D ou un deuxième groupe de ressources de signal de découverte D2D.

4. Équipement d'utilisateur, UE, comprenant :
un premier module de réception (1101), configuré pour recevoir, dans un deuxième groupe de ressources, un signal de dispositif à dispositif, D2D, envoyé par un premier UE dans un premier groupe de ressources et retransmis par une station de base, le signal D2D comprenant un ou toute combinaison d'un signal d'assignation d'ordonnancement, SA, d'un signal de données D2D ou d'un signal de découverte D2D, le premier groupe de ressources étant un groupe de ressources configuré par la station de base dans une fréquence de liaison montante et le deuxième groupe de ressources étant un groupe de ressources configuré par la station de base dans une fréquence de liaison descendante ;
le premier groupe de ressources comprenant un premier groupe de ressources cibles et le deuxième groupe de ressources comprenant un deuxième groupe de ressources cibles ; et
le premier module de réception (1101) comprenant :
une unité de réception (11011), configurée pour recevoir, dans le deuxième groupe de ressources cibles du deuxième groupe de ressources, le signal D2D envoyé par le premier UE dans le premier groupe de ressources cibles du premier groupe de ressources et retransmis par une station de base ;
le premier groupe de ressources cibles correspondant au deuxième groupe de ressources cibles et le signal D2D reçu par la station de base dans le premier groupe de ressources cibles étant envoyé au deuxième UE dans le deuxième groupe de ressources cibles, de sorte que le deuxième UE reçoit le signal D2D dans le deuxième groupe de ressources conformément à une correspondance entre le premier groupe de ressources cibles et le deuxième groupe de ressources cibles ;
le premier groupe de ressources cibles étant un premier groupe de ressources SA, un premier groupe de ressources de signal de données D2D ou un premier groupe de ressources de signal de découverte D2D ; et
le deuxième groupe de ressources cibles étant un deuxième groupe de ressources SA, un deuxième groupe de ressources de signal de données D2D ou un deuxième groupe de ressources de signal de découverte D2D.

5. UE selon la revendication 4, l'UE comprenant en outre :
un deuxième module de réception (1102), configuré pour recevoir, dans le premier groupe de ressources, le signal D2D envoyé par le premier UE.
